# EUROPEAN PATENT APPLICATION

(11) **EP 1 282 027 A1**
(43) Date of publication of application: **05.02.2003**
(21) Application number: 02254718.6
(22) Date of filing: 04.07.2002
(51) Int. Cl.: G06F 1/00

(54) **Trusted platform evaluation**

(30) Priority: 31.07.2001 EP 01306524
(71) Applicant: Hewlett-Packard Company, Palo Alto, CA 94304 (US)
(72) Inventor: Chen, Liqun, Bradley Stoke, Bristol BS32 9DQ (GB); Plaquin, David, Bradley Stoke, Bristol BS32 9DT (GB); Stoker, Michael Brian, Walnut Tree, Milton Keynes MK7 7LL (GB)
(74) Representative: Lawrence, Richard Anthony

(57) **Abstract**

A trusted environment agent (22) helps a user (10) with integrity checking of a trusted computing platform (14, 18). The user (10) does not need to know complicated techniques and does not need to be up to date on all the latest applications, because the trusted environment agent (22) performs the checking of a target platform (14, 18) by interrogation of a trusted device (16, 20) on the target platform (14, 18).

## Description

This invention relates to a method of evaluating a trusted platform and to apparatus for evaluating a trusted platform.

Co-pending patent specification WO 00/48063 in the name of the present applicant discloses a security solution to allow a user of a trusted computing platform (TCP) to check the integrity of that platform. Such TCPs as described in that specification and which are compliant with the trusted computing platform alliance (TCPA) specification version 1 provide the ability for a user to securely check the current configuration of a platform (e.g. its BIOS, OS Loader, OS, loaded applications and application specific configurations) via a trusted device (TD). When a user wants to check the integrity of the platform, he must challenge the TD, which will respond with a trustworthy report of the components on the platform and an integrity metric for each of the components (e.g. a digest of a component image and its configuration information). The user can then validate a component's integrity by checking its metric against the value in a certificate signed by a trusted entity. Full details of the process can be found in the above referenced patent specification, which is incorporated herein by reference.

A user is an entity that is using or intending to use an application on a TCP. A challenger of a TCP means a user who is challenging a TCP for the purpose of checking the integrity of the platform. To check the integrity of applications a user is using, the user must have full knowledge of the integrity metrics related to his applications. If, additionally, the user would like to check whether there is any other application in the same platform affecting his application, the user must be able to validate the trustworthiness of all the components on the platform which can affect the integrity of the application he wishes to use. Since the number of application styles and platform architectures is increasing rapidly, this knowledge could become more and more complicated and difficult to obtain. A further complication is that software in the platform may change dynamically and new software will be outside the scope of the user's knowledge.

Consequently, as an ordinary computer user, it is very difficult to have or even acquire such knowledge. Consequently, most benefit for the user from the TCPA technology is obtained by knowing many complicated techniques.

It is an object of the present invention to address the above mentioned disadvantages.

It is a further object of the present invention to provide a method by which a user may assess a trusted platform without knowing many complicated techniques.

A first aspect of the present invention comprises a trusted environment agent for a trusted computing platform (TCP) comprises integrity challenge means and output means, wherein the integrity challenge means are operable to perform an integrity challenge on a target computing platform and the output means are operable to inform a user of results of the integrity challenge.

The target platform is preferably a platform whose integrity is being checked. The target platform may be a remote computing platform. The target platform may be a local platform, for example, the user's platform.

The trusted environment agent advantageously conducts the task of integrity challenges for a user, so that a user does not need to be aware of the complex actions involved in making, and possibly interpreting, integrity challenges.

The trusted environment agent is preferably operable to be an advisory intermediary between a user and a target computing platform.

The trusted environment agent preferably includes input means operable to receive information from a user concerning the type of integrity challenge to make to the target platform. The input means may be operable to receive from the user information concerning further communication or ending communication with the target platform, preferably depending on the results of the integrity challenge.

The input means allows input from a user, preferably in the form of a policy, which may be offered to the user in a pre-prepared form, to allow the user's preferences to be determined by the trusted environment agent.

The trusted environment agent may be a hardware device. The trusted environment agent may be a software implemented agent. The trusted environment agent may be a firmware device.

The trusted environment agent may be adapted to be installed in a user's TCP. The trusted environment agent may be adapted to be installed in a server remote from the user's TCP and remote from the target computing platform.

According to a second aspect of the present invention a trusted computing platform (TCP) includes a trusted device and a trusted environment agent as described in relation to the first aspect.

The invention extends to a computer server having a trusted environment agent as described in the first aspect.

A third aspect of the present invention is a method of evaluating a trusted computing platform (TCP) comprising: a user of a trusted computing platform contacting a target platform with a trusted environment agent;
said trusted environment agent then performing at least one integrity challenge on the target platform with integrity challenge means, based on instructions provided by the user;
the trusted environment agent then returning the result of the integrity check for use by the user.

Thus, the agent advantageously provides integrity challenge facilities for the user, so that the user need not be aware of how the challenge(s) are performed in practice.

The method preferably includes the agent making a plurality of integrity checks.

The method preferably includes the agent first checking the user's local platform, and then checking a remote platform. In which case the target platform may first be a local target and then a remote target.

The method may include the agent obtaining a plurality of integrity metrics to provide them to the user, preferably with explanations of the metrics. The trusted environment agent may in such a case be an information only agent, wherein the user may act upon the results provided by the trusted environment agent.

Thus, the trusted environment agent conducts the integrity checks for the user, but the user interprets the results. This is beneficial for a skilled user.

The method may include the trusted environment agent performing integrity challenges on the target platform based on information provided by the user, said information preferably including the user's required usage of the target platform. The information may be policy information or contract information. In such a case the trusted environment agent may request the user to make a decision to proceed or not proceed to communicate further with the target platform, based on the results of the integrity challenge(s) performed.

Thus, the user of moderate skill is given advice as to whether to proceed by the trusted environment agent, so he does not have to be able to interpret the integrity metrics.

The method may include the trusted environment agent performing integrity challenges on the target platform and then, based on the results, informing the user whether or not he should proceed to communicate further with the target platform. The decision by the trusted environment agent is preferably based on a policy of the user.

Thus, the user is only given a yes (safe to proceed) or no (do not proceed) answer by the agent thereby aiding an unskilled user.

The invention extends to a recordable medium bearing a computer program operable to perform the method of the third aspect.

All of the features disclosed herein may be combined with any of the above aspects, in any combination.

Specific embodiments of the present invention will now be described, by way of example, and with reference to the accompanying drawings, in which:
Figure 1 is a schematic representation of the communication between a challenger of a trusted computing platform, a trusted computing platform and a trusted environment agent;
Figure 2 is a schematic representation of an alternative communication set up to that shown in Figure 1;
Figure 3 is a schematic representation of an interaction between a user and his platform;
Figure 4 is a schematic representation of an interaction between a user and his platform and its communication with a remote platform; and
Figure 5 is a schematic diagram of the communication and set up for a user communicating with a remote platform from his personal platform via a server.

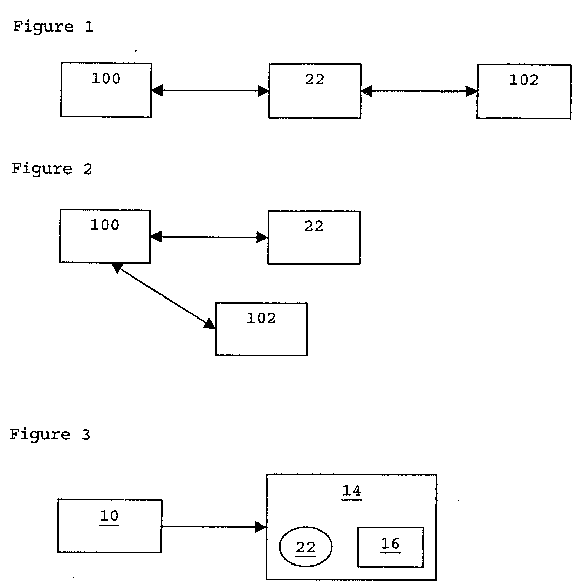

Generally, Figures 1 and 2 show the potential relationships between a challenger 100 (possibly a user 10, a smart card (not shown), or an application), a trusted environment agent 22 and a trusted computing platform 102 (a first, local platform 14 or a remote platform 18).

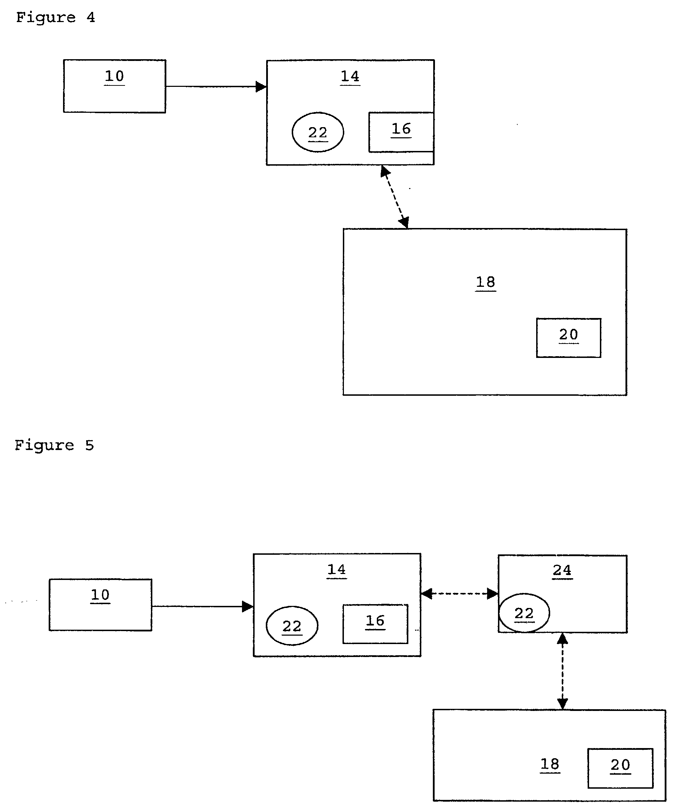

In Figure 1 the challenger 100 only checks the platform 102 via the agent 22. This is discussed in relation to Figures 4 and 5 below where the platform is a remote platform.

In Figure 2 the challenger 100 contacts the platform 102 directly and the agent 22 directly, as discussed in relation to Figure 3 below.

Figure 3 shows a communication set up which may be used initially by the user 10. First the user 10 uses a smart card (not shown) to check the integrity of the first platform 14, for example by checking some basic root functions, such as BIOS, OS Loader, OS etc). The user 10 also checks the integrity of the agent 22. In this case the agent 22 is the first application running on the platform 14.

Once the user 10 has done initial checks by himself on the first (local) platform 14 and the trusted environment agent 22, he can proceed to use the trusted environment agent 22 to perform more complicated integrity checking of other components and of some dynamically changed components of the local platform 14 or of the remote platform 18, as described below.

The initial challenges could be performed by the user 10, a smart card (not shown) or an application on the first platform 14.

As shown in Figure 4, the user 10 uses the first trusted computing platform 14 which may be a personal computer, cell phone, personal digital assistant (PDA), or another communications device. The first platform 14 includes a trusted device 16 as described in WO 00/48063. The first platform 14 communicates with the remote platform 18, which also incorporates a trusted device 20.

The first platform 14 also includes a trusted environment agent 22, which helps the user 10 with integrity checking. The user 10 does not need to know complicated techniques and does not need to be up to date on all the latest applications, because the trusted environment agent 22 performs the checking of the remote platform 18 by interrogation of its trusted device 20 and analysis of the resulting integrity metrics, in the manner described in WO 00/48063.

The trusted environment agent 22 can offer the user 10 information about how to check the trustworthiness of the environment when the user 10 accesses the remote platform 18 for a sensitive application, in which the remote platform 18 incorporates a trusted device 20. The information provided by the trusted environment agent 22 to the user 10 is dependent on the requirements of the sensitive application, the remote platform architecture and a security policy of the user 10, as will be described further below.

The specific details of how the trusted device 20 is challenged and how the integrity metrics provided by the trusted device 20 are interpreted is discussed fully in WO 00/48063 and need not be explained further in this specification.

However, the trusted environment agent 22 may provide information to the user 10 which may include one or more of the following:
- description of the components on the remote platform 18 based on the integrity metrics obtained via a challenge;
- information concerning what checks are required on the remote platform 18 in order to use it for a given purpose;
- how to maintain a user's chosen security level/requirements;
- a list of public information about related certification authorities; and
- the ability of the platform to guarantee and/or maintain the current level of trust.

The trusted environment agent 22 may provide different levels of service, depending upon the requirements and the abilities of the user.

A first level would be one in which the trusted environment agent 22 is fully delegated responsibility for checking the remote platform 18. In order to use this level of service a user provides information during a set up of the trusted environment agent 22 concerning levels of trust which the user 10 specifies. For example, a high level of trust may be required by the user for making payments, whereas as a low level trust may be required for sending emails. Of course other examples of low or high, or medium, levels of trust can be envisaged. Once these levels have been set up, the full delegate agent will undertake the integrity challenge of the trusted device 20 and the remote platform 18 and will provide verification for the user 10. In this example, the trusted environment agent 22 gives only a yes or no result to the user 10, i.e. yes the remote platform is providing an acceptable level of trust, or no the platform is not providing an acceptable level of trust.

In this example of the implementation of the trusted environment agent 22, it is of course possible for a user to amend and further select or clarify levels of trust which he specifies for given actions.

The trusted environment agent 22 may not only tell the user what must be checked to make sure the application environment is trustworthy but also, as required, can perform checking on behalf of the user 10. In order that the trusted environment agent 22 works effectively, the user 10 must be able to trust the integrity of the trusted environment agent 22, and the ability of the agent to perform the task that the user 10 wishes to delegate to the agent 22.

A second level of agent and an alternative to the full delegate agent described above would be to implement the trusted environment agent 22 in the form of a consultant agent, in which form the trusted environment agent 22 provides the user with information and consultation based on the user's required usage of the remote platform 18 and the policy of the remote platform, where the policy sets out the claims of the operator of the remote platform 18 for the platform's performance.

In this consultant agent form, the user may request the trusted platform agent 22 to conduct the challenge and verification of the remote platform 18, but the user 10 will make a final decision whether to proceed further with communication with the remote platform 18 by himself by reviewing the returned integrity metrics. The consultant agent version would be one which a more skilled user or a more discerning or security conscious user may choose to use, given that it does not involve full delegation of important security tasks.

A third level of implementation of the trusted environment agent 22 is to provide an information only agent. In this version, the trusted environment agent 22 only provides integrity checking related information, for example giving a list integrity metrics with detailed explanations. With this version, the user will do his own challenge to check the integrity of a platform. Such a version may be used by a well informed user of the TCPA technology.

The three levels of service which are set out above for the trusted environment agent 22 can be further clarified as being one or more of the following types. An insurance based agent provides the highest level of service and would typically be implemented in the full delegate agent example. An insurance-based agent would result from a contract between a party offering the trusted environment agent service to a user with a guarantee of performance or payment of a penalty fee, should the guaranteed levels of service not be met.

A policy-based agent could be implemented in either the full delegate agent version or the consultant agent version and be based on a policy of the user 10 which sets different levels of sensitivity and trust requirements for a user. The user may be able to amend the details of his policy, which must be checked by the trusted environment agent 22 each time a remote platform 18 is accessed and its trusted device 20 interrogated.

A contract-based agent can be implemented using the set up shown in Figure 5 in which a user's platform 14 communicates with the remote platform 18 via a server 24.

In this implementation the trusted environment agent 22 is located on the server 24 otherwise the set up is the same as that shown in Figure 4. In the contract-based version, a user 10 has a contract with the party running the server 24. The user 10 lets the server 24 know what sort of a user he is and what are his concerns and requirements for security. The trusted environment agent 22 then does the checking of remote platforms 18 for the user 10 via an account with the third party running the server 24.

All of the different levels of trusted environment agent 22 discussed above could be implemented in the set up shown in Figure 4 in which the trusted environment agent 22 is located in a server through which the platform 14 communicates with the remote platform 18.

Alternatively, all of the versions could be implemented using the set up shown in Figure 3 in which the trusted environment agent 22 is located in the platform 14. Even those set ups which require communication via a server 24, as shown in Figure 4, could also have the trusted environment agent 22 located within the user's platform 14.

The service provided by the trusted environment agent 22 can be provided on an online basis, for example by a remote trusted third party via the server 24 described above in which the third party plays the role of the trusted agent to provide an online trusted environment checking service.

As an offline service, the trusted environment agent 22 could be implemented as a software package, which can be downloaded onto a user's own trusted platform 14, such as a personal computer, PDA, cell phone or smart card etc. The benefit of using software for the implementation is that the trusted environment agent 22 can easily be changed by downloading fresh software. It may also be issued by a trusted third party and may be issued with a digital certificate to verify its authenticity.

Alternatively, the trusted environment agent 22 could be implemented as firmware, being a combination of hardware and software, by which the hardware need not be changed, but updates of the software part could be made to improve or amend the performance of the trusted environment agent 22.

Also, the trusted environment agent could be implemented in hardware, which would have the advantage that the agent could be made tamper resistant and could be located within the trusted device 16 on the user's platform or on the server 22 as described above. In the hardware implementation, the trusted environment agent 22 may also be provided with self test, certificate verification and other security measures.

Generally, the user 10 has to establish a trust relationship with the trusted environment agent 22 at the same level as he does with trusted entities in TCPA technology. The solution provided above by the trusted environment agent should not reduce the trust level that the user can obtain from original TCPA technology. The trusted environment agent is not a replacement of the trusted platform module or a smart card; it is a supplementary tool for using TCPA technology.

In this invention, the trusted environment agent can offer a user some information, consultation and suggestion in a trusted manner. When the user accesses a trusted platform for a sensitive application, the agent will provide the user with some information about how to check the trustworthiness of the environment. This information is dependant on the application requirements, the platform architecture and the user's security policy.

The service provided by the trusted environment agent can be either on-line or off-line, and either local or remote. For example, a remote trusted third party could play the role of such a trusted agent to provide an on-line trusted environment checking service. As an off-line service, the agent could be a software package, which can be downloaded into the user's own trusted platform, such as a PC, a PDA, a mobile phone, a smart card etc.

The agent disclosed herein is particularly beneficial for the technique of how to provide the dynamic contents of the integrity information to the user. The agent can help the user to build a trust relationship with some components, with which he, his smart card or his other agent does not have authenticated information in advance.

Without this agent, the ordinary users will find it difficult to check integrity of the platform if they have not got complicated knowledge of metric value interpretations and trusted platform architectures.

Further implementations which can be made involve using the trusted environment agent with some of the present applicant's existing inventions to provide other possible uses for the agent 22.

Although the trusted environment agent has been described in relation to the TCPA specification, it will be appreciated that the trusted environment agent can be implemented with any other trusted platform technology; TCPA has been used merely as an example of one of many possible implementations.

## Claims

1. A trusted environment agent (22) for a trusted computing platform (TCP) (14, 24) comprises integrity challenge means (22) and output means (22), wherein the integrity challenge means (22) are operable to perform an integrity challenge on at least one target computing platform (14, 18) and the output means are operable to inform a user of results of the integrity challenge.

2. A trusted environment agent (22) as claimed in claim 1, in which the target platform (14, 18) is a remote computing platform (18).

3. A trusted environment agent (22) as claimed in either claim 1 or claim 2, in which the target platform (14, 18) is a local platform (14), for example, the user's platform.

4. A trusted environment agent (22) as claimed in any preceding claim, which includes input means (22) operable to receive information from a user (10) concerning the type of integrity challenge to make to the target platform (14, 18).

5. A trusted environment agent (22) as claimed in claim 4, in which the input means (22) are operable to receive from the user (10) information concerning further communication or ending communication with the target platform (14, 18).

6. A trusted environment agent (22) as claimed in either claim 4 or claim 5, in which the input means (22) allows input from a user (10) in the form of a policy to allow the user's preferences to be determined by the trusted environment agent (22).

7. A trusted environment (22) as claimed in any preceding claim, which is operable to be an advisory intermediary between the user 10 and the target platform (14, 18).

8. A trusted environment agent (22) as claimed in any preceding claim, which is a hardware device.

9. A trusted environment agent (22) as claimed in any one of claims 1 to 7, which is a software implemented agent.

10. A trusted environment agent (22) as claimed in any preceding claim, which is adapted to be installed in a user's TCP (14).

11. A trusted environment agent (22) as claimed in any preceding claim, which is adapted to be installed in a server (24) remote from the user's TCP (14) and remote from the target computing platform (18).

12. A computer server (24) includes a trusted environment agent (22) as claimed in any one of claims 1 to 11.

13. A method of evaluating a trusted computing platform (TCP) (14, 18) comprising:
a user (10) of a TCP (14) contacting at least one target platform (14, 18) with a trusted environment agent (22);
said trusted environment agent (22) then performing at least one integrity challenge on said at least one target platform (14, 18) with integrity challenge means (22), based on the instructions provided by the user (10);
the trusted environment agent (22) then returning the results of the integrity check for use by the user (10).

14. A method as claimed in claim 13, which includes the trusted environment agent (22) making a plurality of integrity checks.

15. A method as claimed in either claim 13 or claim 14, which includes the trusted environment agent (22) first checking the user's local platform (14) and then checking a remote platform (18).

16. A method as claimed in any one of claims 13 to 15, which includes the trusted environment agent (22) obtaining a plurality of integrity metrics to provide them to the user (10).

17. A method as claimed in any one of claims 13 to 16, which includes the trusted environment agent (22) performing integrity challenges on the target platform (14, 18) based on information provided by the user (10), wherein said information includes the user's (10) required usage of the target platform (14, 18).

18. A method as claimed in any one of claims 13 to 17, which includes the trusted environment agent (22) performing integrity challenges on the target platform (14, 18) and then, based on the results, informing the user (10) whether or not he should proceed to communicate further with the target platform (14, 18).

19. A recordable medium bearing a computer programme operable to perform the method of any one of claims 13 to 18.
